# FASCICULE DE BREVET EUROPEEN

(11) **EP 1 419 123 B1**
(45) Date de publication et mention de la délivrance du brevet: **21.06.2006**
(21) Numéro de dépôt: 02790211.3
(22) Date de dépôt: 23.07.2002
(51) Int. Cl.: C04B 28/14, C04B 24/26, C04B 103/40

(54) **UTILISATION DE DISPERSANT POUR COMPOSITIONS AQUEUSES DE SULFATE DE CALCIUM HEMIHYDRATE**
VERWENDUNG VON DISPERGIER MITTEL FÜR WÄSSRIGE CALCIUMSULFATHALBHYDRAT ZUSAMMENSETZUNGEN
USE OF DISPERSANT FOR AQUEOUS COMPOSITIONS OF CALCIUM SULPHATE HEMIHYDRATE

(30) Priorité: 23.07.2001 FR 0109801
(43) Date de publication de la demande: 19.05.2004
(73) Titulaire: Chryso S.A.S., 92446 Issy-Les-Moulineaux (FR)
(72) Inventeur: MOSQUET, Martin, F-45300 Dadonville (FR); MAITRASSE, Philippe, F-45170 Chilleurs aux Bois (FR); DUBOIS, Isabelle, F-77210 Avon (FR)
(74) Mandataire: Gaucherand, Michel
(86) Numéro de dépôt international: PCT/FR2002/002628
(87) Numéro de publication internationale: WO 2003/010110

(56) Documents cités:
- EP-A- 0 753 488
- EP-A- 0 792 850
- EP-A- 0 799 807
- EP-A- 0 870 784
- EP-A- 0 931 799
- EP-A- 0 995 727
- EP-A- 1 052 232
- FR-A- 2 776 285
- GB-A- 2 319 522
- US-A- 5 707 445
- US-B1- 6 264 739

## Description

La présente invention concerne l'utilisation d'un dispersant de type polycarboxylique sélectionné parmi les dispersants de ce type pour des compositions aqueuses de sulfate de calcium hémihydraté permettant à la fois l'effet dispersant et le contrôle des temps de début et de fin de prise desdites compositions.

Dans le cadre de la présente invention par compositions aqueuses de sulfate de calcium hémihydrate, on entend des compositions dans lesquelles le sulfate de calcium hémihydrate représente au moins 80% en poids du liant hydraulique total.

Il est connu que de telles compositions sont notamment utilisées pour la réalisation d'éléments de construction comme des plaques de plâtre ou des carreaux de plâtre, fabriqués en continu sur des chaînes de production industrielles.

Selon le cas, l'addition d'un dispersant dans ces compositions aqueuses de sulfate de calcium hémihydrate doit permettre :
- une réduction de la teneur en eau ;
- et/ou une certaine fluidité ;
- et/ou une amélioration de la maniabilité ;
- et/ou un maintien dans le temps de la rhéologie ;
- et/ou une stabilisation de la mousse formée lors de la préparation de ces compositions aqueuses de sulfate de calcium hémihydrate,
toutes les performances précitées devant en outre être obtenues en conservant des temps de prise (temps de début de prise et de fin de prise) compatibles avec l'application visée.

D'une manière générale, les dispersants de type polycàrboxylique sont constitués essentiellement de polymères comprenant une chaîne polycarboxylique, éventuellement salifiée, à laquelle sont fixés des chaînes polyéthers par l'intermédiaire de fonction ester.

Il est connu et revendiqué que ces dispersants polycarboxyliques sont mis en oeuvre dans des compositions aqueuses de particules minérales pulvérulentes, en particulier de sulfate de calcium hémihydrate pour y exercer non seulement leur intéressante propriété dispersante, mais également et simultanément l'une ou l'autre des propriétés précédemment évoquées, telles que par exemple l'amélioration de la fluidité des compositions aqueuses de sulfate de calcium hémihydrate, la maîtrise de la formation de mousse lors de la préparation et de la mise en oeuvre desdites compositions, le maintien dans le temps des caractéristiques rhéologiques, ou autres.

Mais il est aussi connu que les dispersants de type polycarboxylique, dès lors qu'ils sont utilisés dans des compositions aqueuses de sulfate de calcium hémihydrate peuvent provoquer des variations plus ou moins importantes et aléatoires des temps de prise du sulfate de calcium hémihydrate, variations particulièrement gênantes quand elles se manifestent par des retards du début de prise et des décalages souvent considérables des fins de prise, de telle sorte que le temps de prise devient lui-même aléatoire et peut être allongé de manière préjudiciable.

Tel est, en effet, le phénomène qui peut se produire lorsque des compositions aqueuses de sulfate de calcium hémihydrate contenant un dispersant de type polycarboxylique, alimentent des chaînes de plaques de plâtre ou de carreaux de plâtre. Dans le cas, par exemple, d'une chaîne de fabrication de plaques de plâtre, le début de prise et la fin de prise de la composition aqueuse de sulfate de calcium hémihydrate mise en oeuvre doivent être nécessairement précis et peu variables car la coupe en ligne des plaques de plâtre se fait lorsque la prise de la composition aqueuse mise en oeuvre est suffisamment avancée pour que chaque plaque, au moment de la coupe puisse supporter cette coupe et soit dans un état de cohésion et de dureté de la matière constitutive tel que la plaque, une fois coupée, subisse sans dommage les manutentions mécaniques nécessaires à la poursuite du cycle de fabrication jusqu'à son terme.

C'est pourquoi, les procédés industriels de fabrication en continu d'articles en plâtre tels que des plaques de plâtre ou des carreaux de plâtre nécessitent une régularité des débuts et fin de prise des compositions aqueuses de sulfate de calcium hémihydrate mises en oeuvre quel que soit le dispersant utilisé, en particulier quand le dispersant est de type polycarboxylique, de telle sorte que les procédés industriels de fabrication en continu de ces articles en plâtre soient robustes, c'est-à-dire protégés des variations aléatoires des temps de prise des compositions mises en oeuvre, variations attribuables à la structure chimique de l'agent dispersant de type polycarboxylique et/ou aux variations éventuelles de la quantité de cet agent dans les compositions aqueuses de sulfate de calcium hémihydrate mises en oeuvre.

De nombreuses publications attestent de l'importance des travaux de recherche portant sur les dispersants de type polycarboxylique, mais également portant sur d'autres caractéristiques conjointes accompagnant simultanément la première et essentielle caractéristique de dispersion.

Dans un premier document (GB 2 319 522A), une composition aqueuse de plâtre artificiel, ayant un pH de 5 à 10, est décrite renfermant en tant qu'agent dispersant et plastifiant, un copolymère obtenu par polymérisation radicalaire d'un monomère (a) de monoester de polyalkylène glycol contenant 2 à 300 molécules d'oxyalkylène en C₂-C₃ avec au moins un monomère (b) choisi parmi les acides monocarboxyliques insaturés, les acides dicarboxyliques insaturés et les acides allylsulfoniques. Selon ce brevet, une gâchée de plâtre artificiel avec un pH ajusté entre 5 et 10 et renfermant l'agent simultanément dispersant et plastifiant précité présente à la fois une bonne dispersion des particules de plâtre et une excellente fluidité de la composition.

Dans un autre document (US 6,264,739), est décrit un agent dispersant mis en oeuvre dans une composition aqueuse de sulfate de calcium hémihydrate qui, simultanément, révèle un excellent effet de stabilisation de la mousse formée lors de la préparation de la composition. Cet agent à la fois dispersant des particules de plâtre et stabilisant, de la mousse formés, de type polycarboxylique est obtenu par copolymérisation radicalaire d'un monomère a) de monoester de polyalkylène glycol au plus 300 molécules d'oxyalkylène en C2 et/ou C3, avec au moins un monomère b) choisi parmi les acides monocarboxyliques insaturés, les acides polycarboxyliques insaturés et les acides alkyl sulfoniques. Comme le précise ce document, une composition aqueuse de sulfate de calcium hémihydrate renfermant ce copolymère de type polycarboxylique, manifeste simultanément une bonne dispersion des particules de sulfate de calcium hémihydrate mais également une bonne stabilisation de l'effet de mousse qui apparaît lors de la préparation de ladite composition.

Dans un autre document (EP0931799) est décrite une composition aqueuse de ciment qui comprend un ciment ou liant hydraulique, tel que du ciment de Portland, un ciment alumineux, des mélanges de ciments et éventuellement des matériaux hydrauliques comme du gypse qui est un sulfate de calcium dihydrate, et un adjuvant qui est un copolymère de type polycarboxylique résultant de la copolymérisation de monomères de :
Type 1 : 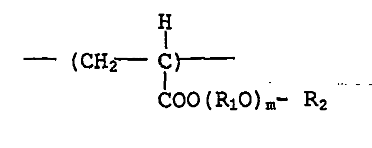 qui est un ester de l'acide acrylique ayant des groupements d'oxyde d'éthylène et/ou d'oxyde de propylène.
Type 2 : 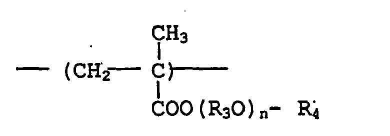 qui est un ester de l'acide méthacrylique ayant des groupements d'oxyde d'éthylène et/ou d'oxyde de propylène.
Type 3 : 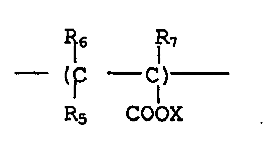 qui est un acide mono ou polycarboxylique insaturé.

La présence de cet adjuvant de type polycarboxylique, tel qu'il est revendiqué, dans les compositions aqueuses de ciment, mortier, ou béton, s'impose par le fait que, simultanément, il tient son rôle de dispersant, et intervient dans cette même composition aqueuse comme agent de conservation de la fluidité aussi bien à haute température qu'à basse température en conservant à ladite composition une excellente capacité d'étalement.

Dans un autre document (EP0753488) est décrit et revendiqué un dispersant pour des compositions de ciment.

Cet agent dispersant est un copolymère polycarboxylique obtenu par la copolymérisation :
- d'un monomère a) du type : 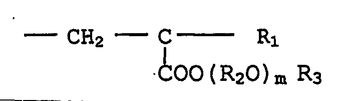 qui est un ester d'un acide alkoxypolyalkylène glycol mono(meth)acrylique
- avec un monomère b) du type : 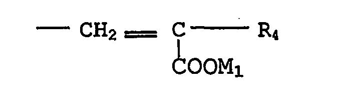 qui est un acide (meth)acrylique

L'utilisation de ce dispersant de type polycarboxylique dans les compositions de ciment est justifiée par le fait que non seulement il intervient avec sa spécificité bien connue de dispersant pour les particules de ciment, mais aussi, et simultanément avec cette première et principale spécificité, il intervient dans ces compositions de ciment comme un agent apporteur d'autres caractéristiques fondamentales, en particulier celles d'être un agent d'augmentation et de maintien de la coulabilité des compositions de ciment malgré une réduction drastique de la quantité d'eau présente dans la composition, de régulation de la quantité d'air entrant dans la composition et en finalité, d'obtention d'un béton de haute résistance mécanique.

Dans un autre document, enfin, (EP1052232) est également décrit et revendiqué un dispersant de type polycarboxylique pour des compositions de ciment pouvant contenir éventuellement du gypse.

Ce dispersant de type polycarboxylique, qui se présente sous une forme pulvérulente, est un copolymère qui résulte de la copolymérisation :
- d'un monomère du type 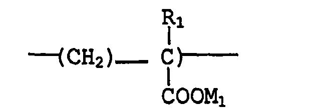 qui est un acide (méth)acrylique
- avec un autre monomère du type : 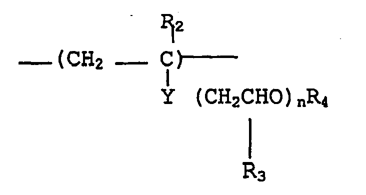 qui est un composé à structure acrylique ou méthacrylique comprenant une chaîne polyalkylène.

L'utilisation de ce dispersant de type polycarboxylique est d'apporter à la composition de ciment, simultanément deux caractéristiques essentielles que sont la dispersion des particules de ciment et une excellente fluidité de la composition, malgré une réduction de la quantité d'eau présente.

Ainsi, l'observation de l'état de la technique :
- malgré les substantielles améliorations proposées et apportées par les dispersants polycarboxyliques aux compositions aqueuses de sulfate de calcium hémihydrate ou à des compositions aqueuses de ciment pouvant éventuellement contenir du gypse, améliorations qui sont simultanément la caractéristique essentielle de dispersion et une autre caractéristique associée telle que par exemple l'amélioration ou le maintien de la fluidité desdites compositions malgré une réduction importante de la quantité d'eau ou encore la maîtrise de l'effet mousse lors de la préparation des compositions ou d'autres caractéristiques telles qu'évoquées précédemment ;
- ne suggère ni ne traite de cet inconvénient majeur qu'est l'apparition d'une variabilité aléatoire des temps de début et de fin de prise, apportée par les dispersants de type polycarboxylique, aux compositions aqueuses de sulfate de calcium hémihydrate, variabilité particulièrement gênante dans les installations industrielles de production en continu, d'objets tels que plaques de plâtre ou carreau de plâtre.

La demanderesse a maintenant trouvé par sélection un dispersant de type polycarboxylique pour compositions aqueuses de sulfate de calcium hémihydrate qui permet simultanément à son action dispersante de contrôler les temps de début et/ou de fin de prise de compositions aqueuses de sulfate de calcium hémihydrate par rapport à ceux constatés antérieurement avec des dispersants de type polycarboxylique.

Plus précisément, l'invention a pour objet l'utilisation d'un dispersant de type carboxylique pour des compositions aqueuses de sulfate de calcium hémihydraté sélectionné dans le but de contrôler les temps de début et/ou de fin de prise, caractérisé en ce que ce dispersant-contrôleur des temps de début et/ou de fin de prise comprend au moins 75 % en nombre d'un enchaînement linéaire aléatoire d'unités structurelles (1) et (2) représentées par les formules suivantes : 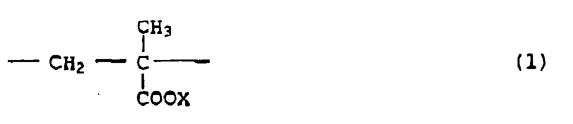 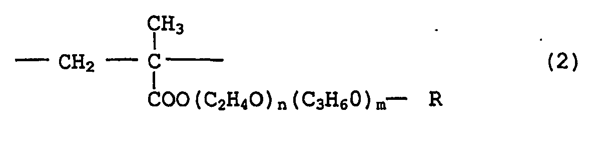 dans lesquelles X représente un atome d'hydrogène, un métal alcalin, un métal alcalino-terreux ou un ammonium, lesdites unités structurelles (1) pouvant être identiques ou différentes ; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes ; le rapport du nombre d'unités structurelles (2), sur le nombre total des unités structurelles (1) et (2), étant compris entre 5 % et 60 %.

Dans le cas de la présente invention, par contrôle des temps de début et de fin de prise de compositions aqueuses de sulfate de calcium hémihydrate, on entend que les dispersants mis en oeuvre dans lesdites composition n'entraînent ni une variation significative des temps de début et de fin de prise, pouvant se manifester par une augmentation ou une diminution sensible de ces temps, ni une variation significative du temps de prise qui est la différence entre le temps de fin de prise et le temps de début de prise : ces variations significatives se manifestent plus généralement par un retard suffisamment marqué de ces temps, retard qui perturberait les méthodes habituelles de réglage de début et de fin de prise pratiquées en particulier dans les procédés industriels de fabrication en continu d'articles tels que plaques de plâtre ou carreau de plâtre.

Le dispersant de type polycarboxylique sélectionné utilisé dans une composition aqueuse de sulfate de calcium hémihydrate selon l'invention peut renfermer au plus 25 % en nombre d'unités structurelles autres que les unités structurelles (1) et (2). A titre d'exemples de telles unités, on peut citer des unités formées à partir de monomères insaturés comprenant des groupements sulfonés ou des groupements d'esters d'alkyles. A titre de telles unités, on évitera cependant les monomères connus dans l'art pour engendrer un retard suffisamment marqué des temps de prise comme, par exemple, des monomères phosphonés ou phosphatés.

Conformément à une variante préférentielle de l'invention, le dispersant de type polycarboxylique sélectionné utilisé dans les compositions selon l'invention, comprend au moins 90 % en nombre d'unités structurelles (1) et (2), plus préférentiellement 100 % en nombre d'unités structurelles (1) et (2) en ne prenant pas en compte les unités servant de terminaisons de chaîne liées aux méthodes d'amorçage de polymérisation et de contrôle de longueur de chaîne.

De préférence encore, le dispersant sélectionné de l'invention a une structure chimique présentant l'une ou plusieurs des caractéristiques qui suivent :
- m est égal à zéro et n est un nombre entier variant de 5 à 160 ;
- encore mieux, m est égal à zéro et n est un nombre entier variant de 7 à 120;
- R représente un groupe alkyle de 1 à 5 atomes de carbone ;
- encore mieux, R est un radical méthyle, éthyle, propyle ou butyle.

De préférence, le dispersant sélectionné utilisé dans le cadre de l'invention est tel que le rapport du nombre d'unités structurelles (2), qui correspondent à des esters des unités structurelles (1), sur le nombre total des unités structurelles (1) et (2), est compris entre 5 % et 50 %.

Egalement, l'invention a pour objet des compositions aqueuses de sulfate de calcium hémihydrate comprenant un dispersant qui permet simultanément à son action dispersante de contrôler les temps de début et/ou de fin de prise de compositions aqueuses de sulfate de calcium hémihydrate, ledit dispersant sélectionné parmi les dispersants polycarboxyliques comprenant au moins 75 % en nombre d'un enchaînement linéaire aléatoire d'unités structurelles (1) et (2) représentées par les formules suivantes : 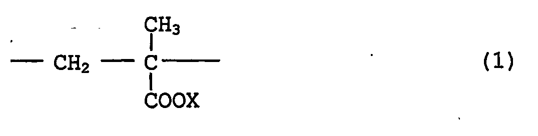 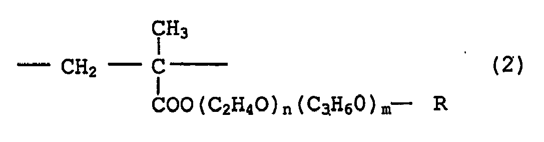 dans lesquelles X représente un atome d'hydrogène, un métal alcalin, un métal alcalino-terreux ou un ammonium, lesdites unités structurelles (1) pouvant être identiques ou différentes ; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes ; le rapport du nombre d'unités structurelles (2) sur le nombre total des unités structurelles (1) et (2) étant compris entre 5 % et 60 %.

Les compositions selon l'invention ayant atteint les meilleures performances sont celles qui renferment l'un des dispersants sélectionnés présentés précédemment.

Notamment, les meilleurs résultats ont été obtenus avec des dispersants selon l'invention comprenant 100 % en nombre d'unités structurelles (1) et (2) en ne prenant pas en compte les unités servant de terminaisons de chaîne, dans lesquelles m est égal à zéro, n varie de 7 à 120 et pour lesquels le rapport du nombre d'unités structurelles (2), qui correspondent à des esters des unités structurelles (1), sur le nombre total des unités structurelles (1) et (2), est compris entre 15 % et 40 %.

Avantageusement, la quantité des éventuels réactifs résiduels restant après la fabrication du dispersant selon l'invention (communément appelés réactifs résiduels), ayant conduit à la formation des unités structurelles (1) et/ou (2), est inférieure ou égale à 20 % en poids rapporté au poids total du dispersant exprimé en sec. Lorsque le dispersant est obtenu par estérification partielle, catalysée à l'aide d'une base, par réaction d'un acide polyméthacrylique avec un polyéther contenant un groupe hydroxyle libre pouvant réagir avec une fonction carboxylique, selon le second mode de fabrication décrit ci-après, la quantité des éventuels réactifs résiduels est de préférence inférieure à 10 % en poids, plus préférentiellement inférieure à 2 % en poids rapporté au poids total du dispersant exprimé en sec.

Le poids moléculaire moyen en poids, "Mw", du dispersant selon l'invention, mesuré par chromatographie d'exclusion stérique, avec un étalonnage polyéthylèneglycol, varie généralement d'environ 1000 à environ 100 000 gramme par mole (dalton), de préférence d'environ 10 000 à environ 80.000.

Le contrôle du temps de prise de compositions aqueuses de sulfate de calcium hémihydrate lorsqu'on sélectionne le dispersant selon l'invention parmi les dispersants polycarboxyliques constitue une amélioration extrêmement importante pour de nombreuses applications, en particulier pour des compositions de sulfate de calcium hémihydrate destinées à la fabrication d'éléments de type plaques de plâtre et carreaux de plâtre.

Avantageusement, le rapport pondéral en poids eau/sulfate de calcium hémihydrate (E/P) peut être compris entre 0,55 et 0,75.

Avantageusement, la quantité de dispersant sélectionné additionnée à la composition aqueuse de sulfate de calcium hémihydrate est comprise entre 0,01 % et 2 % en poids en sec rapporté au poids de sulfate de calcium hémihydrate.

Divers autres additifs connus de l'homme de l'art pour les compositions aqueuses de sulfate de calcium hémihydrate peuvent, en outre, être ajoutés aux compositions selon l'invention. A titre d'exemple, on peut citer des accélérateurs de prise, des agents antimousse.

Divers procédés de fabrication du dispersant sélectionné utilisé dans le cadre de l'invention peuvent être envisagés.

Selon un premier mode de fabrication, le dispersant sélectionné selon l'invention peut être obtenu par copolymérisation d'un monomère (a), représenté par la formule (A) suivante, avec au moins un monomère (b), sélectionné parmi les composés représentés par la formule (B) suivante : 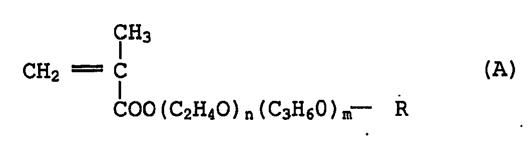 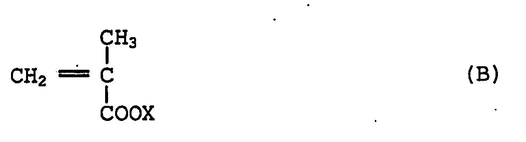 dans lesquelles X représente un atome d'hydrogène, un métal alcalin, un métal alcalino-terreux ou un ammonium ; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène ; R représente un groupe alkyle de 1 à 12 atomes de carbone.

Selon un second mode de fabrication, le dispersant sélectionné selon l'invention peut être obtenu par estérification partielle, catalysée à l'aide d'une base, par réaction d'un acide polyméthacrylique avec un polyéther contenant un groupe hydroxyle libre pouvant réagir avec une fonction carboxylique, éventuellement salifiée, dudit acide polyméthacrylique, de formule générale

HO-(C₂H₄O)ₙ(C₃H₆O)ₘ-R

dans laquelle n est un nombre entier variant de 1 à 250, m est un nombre entier variant de 0 à 100 avec m < n, les groupes d'oxyde d'éthylène et d'oxyde de propylène étant distribués ou non de manière aléatoire, et R représente un groupe alkyle de 1 à 12 atomes de carbone.

Dans le cadre du second mode de fabrication du dispersant sélectionné selon l'invention, de préférence, le polyéther ou alkyléther de polyalkylène glycol, de formule générale HO-(C₂H₄O)ₙ(C₃H₆O)ₘ-R, est tel que :
- R représente un groupe alkyle de 1 à 5 atomes de carbone, encore mieux, R est un radical méthyle, éthyle, propyle ou butyle;
- m est égal à 0 et n est un nombre entier variant de 5 à 160, de préférence n est un nombre entier variant de 7 à 120.

Dans le cadre du second mode de fabrication du dispersant sélectionné selon l'invention, l'acide polyméthacrylique est obtenu par polymérisation d'un mélange de monomères comprenant au moins 75 % en mole d'acide méthacrylique et au plus 25 % en mole d'un comonomère de l'acide méthacrylique, de préférence encore par polymérisation de 100 % d'acide méthacrylique sans tenir compte des extrémités.

Dans le cadre du second mode de fabrication du dispersant sélectionné selon l'invention, la base utilisée pour catalyser la réaction d'estérification partielle est un hydroxyde de métal alcalin, de préférence l'hydroxyde de sodium ou l'hydroxyde de lithium. On peut également utiliser comme base, une amine tertiaire.

Pour la préparation du dispersant sélectionné selon l'invention pour compositions aqueuses de sulfate de calcium hémihydrate, on pourra se reporter à la description détaillée du procédé donné dans le brevet français n° 2 776 285.

Ainsi, le dispersant sélectionné selon l'invention peut être obtenu par divers procédés de fabrication connus en soi.

Toutefois, on choisit de préférence des dispersants conformes à l'invention, qui sont issus du procédé par réaction d'estérification partielle, catalysée à l'aide d'une base, tel que défini précédemment.

En effet, les meilleurs résultats ont été atteints avec des dispersants sélectionnés obtenus selon le second mode de préparation dudit dispersant, une des explications pouvant être que, dans ce mode, la teneur en réactifs résiduels est très limitée.

Les propriétés du dispersant sélectionné dans le cadre de l'invention peuvent être mises à profit pour la réalisation de compositions aqueuses de sulfate de calcium hémihydrate destinées à la fabrication de plaques de plâtre et de carreaux de plâtre.

Le dispersant sélectionné pour compositions aqueuses de sulfate de calcium hémihydrate selon l'invention peut être utilisé seul ou en combinaison avec un autre dispersant sélectionné dans le cadre de l'invention. Ainsi, la dispersion de sulfate de calcium hémihydrate dans les compositions aqueuses selon l'invention peut être assurée par un mélange de dispersants sélectionnés tels que définis dans le cadre de l'invention.

Le dispersant sélectionné dans le cadre de la présente invention peut également être utilisé en combinaison avec d'autres dispersants plus classiques comme, par exemple, ceux issus de la condensation du formaldéhyde et de naphtalènes sulfonés ou ceux issus de la condensation du formaldéhyde et de mélamines sulfonées, dès lors que ces dispersants plus classiques ne manifestent aucun effet significatif sur les temps de début et de fin de prise des plâtres utilisés.

Les exemples non limitatifs ci-après illustrent la présente invention.

### Préparation des dispersants

### Premier mode de préparation

Selon un premier mode de préparation, le dispersant sélectionné de l'invention est préparé par copolymérisation :
- d'acide méthacrylique, commercialisé par la société SIGMA-ALDRICH ;
- avec un méthacrylate de méthyl polyéthylène glycol, de masse molaire moyenne en poids variable, commercialisé par la société SIGMA-ALDRICH.

Dans la suite des exemples, le premier mode de préparation du dispersant sera rappelé par le terme abrégé "copolymérisation".

### Second mode de préparation

Selon un second mode de préparation par estérification partielle, catalysée à l'aide d'une base, le dispersant sélectionné de l'invention est obtenu en faisant réagir :
- soit un acide polyacrylique, de masse molaire moyenne en poids mesurée à 4000 g/mol (Dalton), dilué à 50% dans l'eau, et commercialisé par la société BASF sous le nom commercial Sokalan CP 10S
- soit un acide polyméthacrylique, de masse molaire moyenne en poids mesurée à 4000 g/mol (daltons) par chromatographie d'exclusion stérique, dilué à 30% dans l'eau et obtenu par polymérisation de l'acide méthacrylique en présence d'acide thioglycolique catalysée par de l'eau oxygénée ;
- avec un polyéther contenant un groupe hydroxyle libre pouvant réagir avec une fonction carboxylique dudit acide poly(méth)acrylique, de masse molaire moyenne en poids variable, commercialisé par la société SIGMA-ALDRICH.

Pour la préparation des dispersants sélectionnés selon ce second mode de préparation, on pourra se référer à la description détaillée du procédé donné dans le brevet français n° 2776285.

Dans la suite des exemples, le second mode de préparation du dispersant sélectionné sera rappelé par le terme abrégé "estérification".

### Caractéristiques des dispersants testés dans les exemples.

Les caractéristiques de ces dispersants sont présentés dans le tableau suivant :

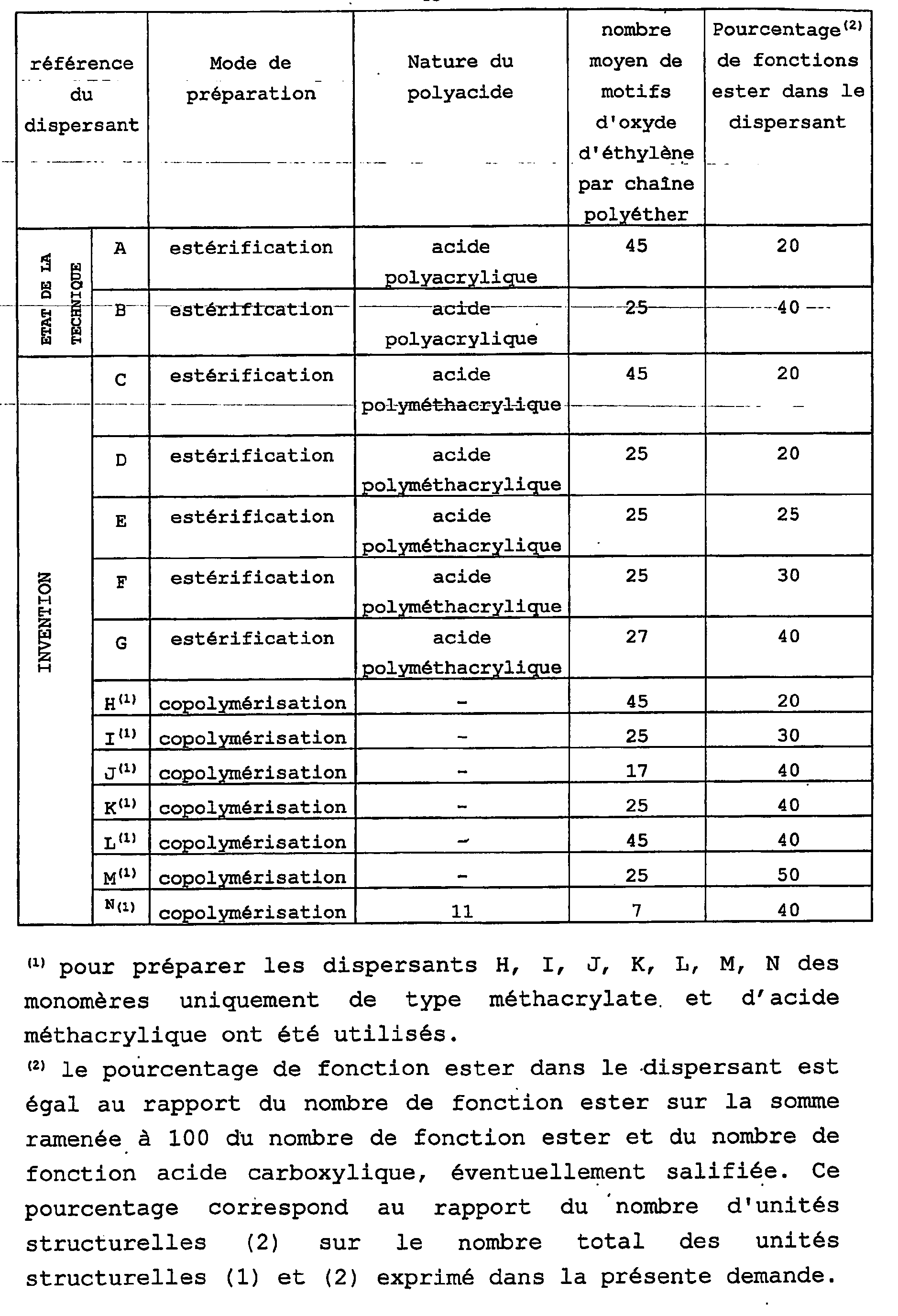

Les conditions' d'évaluation des divers composés (de références A à M) employés en tant que dispersant pour contrôler simultanément à leur action dispersante les temps de début et de fin de prise de compositions aqueuses de sulfate de calcium hémihydrate sont reportées ci-après.

### A/ Conditions des tests d'évaluation des dispersants exemplifiés utilisés dans une composition aqueuse de sulfate de calcium hémihydrate

Le sulfate de calcium hémihydrate (i.e. plâtre) utilisé est obtenu à partir du gypse de Taverny (France).

Les dispersants sont utilisés en solution aqueuse contenant de 20% à 30% de matière active et sont évalués au travers de mesures d'étalement et de temps de début et de fin de prise dans une gâchée de plâtre préparée selon le mode de préparation suivant.

### A1. On décrit ci-après le mode de préparation d'une gâchée de plâtre

En premier lieu, on prépare une gâchée de plâtre comprenant :
- 190 g de plâtre
- 123,5 g d'eau
- et X% en poids sec du dispersant rapporté à la quantité de plâtre.

Le rapport pondéral eau/plâtre est égal à 0,65.

### Mode opératoire

Dans un bol de gâchage, on pèse 123,5 g d'eau de ville à température ambiante (23 °C +/- 2 °C). A t=0, 190 g de plâtre sont saupoudrés dans l'eau en 10 secondes maximum.

A t=0 + 30 s, le mélange est malaxé en décrivant environ 30 mouvements en forme de 8 à l'aide d'une spatule ou en utilisant un malaxeur. Après 30 secondes de ce mélange, on obtient une pâte homogène.

### A2. Détermination de l'étalement

Immédiatement après le gâchage décrit ci-dessus, à t=0 + 1 mn, on remplit soigneusement à ras, en arasant la surface, un moule appelé « anneau de Smith » préalablement centré sur une plaque de verre plane, lisse et propre de type SECURIT, avec la gâchée de plâtre préparée selon le mode opératoire ci-dessus.

L'anneau de Smith utilisé, préalablement disposé sur ladite plaque de verre, est un moule cylindrique en inox présentant les caractéristiques suivantes :
- hauteur : 50mm +/- 0.1mm
- diamètre intérieur : 60mm +/- 0.1mm

A t=0+1mn15s, on retire lentement l'anneau de Smith et on mesure, suivant deux directions perpendiculaires, le diamètre en millimètre de la galette de plâtre ainsi formée.

L'étalement est évalué en mesurant le diamètre de la galette de plâtre ainsi formée sur la plaque de verre, suivant deux directions perpendiculaires.

### A3. Détermination du temps de prise d'une pâte pure de plâtre

Le temps de prise est la différence entre le temps de début de prise et le temps de fin de prise.

### Mode opératoire

On prépare, sur une plaque de verre, une galette de plâtre selon le mode de préparation présenté précédemment. Puis, on pratique des sillons de façon rectiligne à intervalles réguliers dans la pâte pure à l'aide d'un couteau à lame dont l'épaisseur et la hauteur de lame sont définies. La lame du couteau doit être maintenue dans un plan vertical et former un angle de 30° environ avec la plaque. Les sillons doivent être espacés de 1 cm environ.

Les caractéristiques du couteau à lame utilisé sont les suivantes :
- épaisseur de la lame (bord supérieur) : environ 2,30 mm
- Hauteur de la lame : environ 18 mm maximum.

### Détermination du temps de début de prise

Le temps de début de prise correspond au moment où le sillon ne se referme plus sur toute sa longueur pour les pâtes pures.

Le temps de début de prise est par conséquent le temps où le sillon pratiqué dans la pâte ne se referme plus sur toute sa longueur.

### Détermination du temps de fin de prise

Le temps de fin de prise correspond au moment où une dureté de surface définie est atteinte.

Le temps de fin de prise est déterminé à l'aide d'une aiguille dite shore A.

Cette aiguille est appliquée perpendiculairement à la surface de la pâte pure de plâtre, progressivement et sans à-coup. La prise est atteinte lorsque la dureté superficielle est de 40 unités à l'aide du Shore-A.

Les différents essais sont présentés ci-après.

### 1^{ère} série d'exemples montrant l'influence de la nature "du polyacide" du dispersant

Les résultats obtenus sont regroupés dans le tableau suivant :

| Référence de dispersant | % en poids d'extrait sec de dispersant | Etalement (mm) | Début de prise (mn) | Fin de prise (mn) | Temps de prise (mn) |
|---|---|---|---|---|---|
| A (ET) | 0,08 | 155 | 11'50 | 28'50 | 17'00 |
| C (I) | 0,08 | 156 | 05' 10 | 14'20 | 09'10 |
| H⁽¹⁾ (I) | 0,08 | 122 | 05'30 | 17'40 | 12'10 |
| B(ET) | 0,15 | 160 | 24'30 | 45'00 | 21'30 |
| G(I) | 0,15 | 131 | 05'00 | 18'20 | 13'20 |
| K⁽¹⁾ (I) | 0,15 | 142 | 05'20 | 18'50 | 13' 30 |

| | | | | | |
|---|---|---|---|---|---|
| (I) Invention | | | | | |
| (ET) Etat de la technique | | | | | |

Les résultats observés mettent en évidence un temps de début de prise plus long pour les pâtes pures renfermant les dispersants A et B, constituant l'état de la technique que pour celles renfermant les autres dispersants sélectionnés selon l'invention. On constate également que le temps de fin de prise est rallongé. Par conséquent, le temps de prise des galettes de plâtre réalisées avec les dispersants A et B (Etat de la technique) est bien plus long que le temps de prise des galettes de plâtre réalisées à partir des autres dispersants sélectionnés selon l'invention. On constate un comportement positif des dispersants formés à partir d'acide polyméthacrylique (par le second mode de préparation : estérification) ou à partir d'acide méthacrylique et de méthacrylate de méthyl polyéthylène glycol (par le premier mode de préparation : copolymérisation) sur les temps de prise des galettes de plâtre (c'est-à-dire une réduction du temps de prise) par rapport aux dispersants obtenus à partir d'acide polyacrylique (variations aléatoires et importantes du temps de prise).

### 2^{éme} série d'exemples montrant l'influence de la concentration en dispersant

Les résultats obtenus sont regroupés dans le tableau qui suit :

| Référence du dispersant | % en poids d'extrait sec de dispersant | Etalement (mm) | Début de prise (mn) | Fin de prise (mn) | Temps de prise (mn) |
|---|---|---|---|---|---|
| A_{(ET)} | 0,15 | 163 | 17'30 | 38'40 | 22'10 |
| A_{(ET)} | 2 | 157 | > à 30'00 | >> à 45' 00 | - |
| C_{(I)} | 0,15 | 177 | 05'30 | 13'30 | 08'00 |
| C_{(I)} | 2 | 210 | 07'10 | 16'00 | 08'50 |
| B_{(ET)} | 0,15 | 160 | 24'30 | 45'00 | 21'30 |
| B_{(ET)} | 2 | 158 | > à 45'00 | >> à 60'00 | - |
| G_{(I)} | 0,15 | 131 | 05'00 | 18'20 | 13'20 |
| G_{(I)} | 2 | 140 | 05' 30 | 19'30 | 14'00 |

Les résultats mettent en évidence une augmentation des temps de prise des galettes de plâtre lorsque l'on augmente le % d'extrait sec de dispersant contenu dans celles-ci, et ce pour les différents dispersants employés. Toutefois, cette augmentation du temps de prise se révèle très exacerbée lors de l'utilisation des dispersants A et B (Etat de la technique) par rapport à celle des dispersants C et G (dispersant sélectionné selon l'invention).

Ces résultats mettent en évidence une augmentation significative des temps de prise lorsque le dispersant est utilisé en forte concentration et est obtenu à partir de l'acide polyacrylique.

### 3^{ème} série d'exemples à propos de l'influence du pourcentage de fonctions ester dans le dispersant sélectionné selon l'invention.

Le dosage des dispersants en pourcentage d'extrait sec est égal à 2% pour les dispersants obtenus par le second mode de préparation (estérification) et de 0,1% pour ceux obtenus par le premier mode de préparation (copolymérisation). Les résultats sont reportés dans le tableau qui suit :

| Référence du dispersant | Pourcentage⁽²⁾ de fonctions ester dans le dispersant | Etalement (mm) | Début de prise (mn) | Fin de prise (mn) | Temps de prise (mn) |
|---|---|---|---|---|---|
| D | 20 | 204 | 09'10 | 22'20 | 13'10 |
| E | 25 | 195 | 06'00 | 15'00 | 09'00 |
| F | 30 | 183 | 05'15 | 14'30 | 09'15 |
| I⁽¹⁾ | 30 | 170 | 07'00 | 17'50 | 10'50 |
| K⁽¹⁾ | 40 | 155 | 06'50 | 17'30 | 11'20 |
| M⁽¹⁾ | 50 | 127 | 05'40 | 19'40 | 14'00 |

| | | | | | |
|---|---|---|---|---|---|
| ⁽¹⁾ pour préparer les dispersants H, I, J, K, L, M, des monomères uniquement de type méthacrylate et d'acide méthacrylique ont été utilisés. | | | | | |
| ⁽²⁾ ce pourcentage est égal au rapport du nombre de fonctions ester sur la somme, ramenée à 100, du nombre de fonctions ester et le nombre de fonctions acide carboxylique, éventuellement salifiée. | | | | | |

On observe une diminution de la valeur de l'étalement lorsqu'on augmente le pourcentage de fonctions ester dans le dispersant. Une diminution du temps de début de prise est également mise en évidence lorsque le pourcentage de fonctions ester dans le dispersant augmente quel que soit le mode de préparation des dispersants. Par ailleurs, le temps de prise des galettes de plâtre est contrôlé. Ainsi, l'augmentation du pourcentage de fonctions ester dans le dispersant n'a pas d'effet significatif sur la prise des galettes de plâtre.

### 4^{ème} série d'exemples avec des dispersants sélectionnés selon l'invention de longueurs de chaîne polyéther différentes.

Le dosage des dispersants, en pourcentage en poids d'extrait sec, est égal à 0,1%. Les résultats sont regroupés dans le tableau qui suit :

| Référence du dispersant | (n) nombre moyen de motifs d'oxyde d'éthylène | Etalement (mm) | Début de prise (mn) | Fin de prise (mn) | Temps de prise (mn) |
|---|---|---|---|---|---|
| J⁽¹⁾ | 17 | 160 | 07'15 | 19'30 | 12'15 |
| K⁽¹⁾ | 25 | 155 | 06'50 | 17'30 | 11'20 |
| L⁽¹⁾ | 45 | 128 | 05'50 | 18'00 | 12'10 |
| G⁽¹⁾ | 27 | 13 | 05'00 | 18'20 | 13'20 |
| N⁽¹⁾ | 7 | 150 | 06'15 | 16'30 | 10'15 |

On observe une diminution de la valeur de l'étalement des galettes de plâtre lorsqu'on augmente le nombre de motifs d'oxyde d'éthylène de la chaîne polyéther des dispersants, à un fort pourcentage en fonctions ester (40%). Une diminution du temps de début de prise est mise en évidence lorsque le nombre de motifs d'oxyde d'éthylène de la chaîne polyéther augmente. Par ailleurs, le temps de prise est contrôlé. Les résultats obtenus montrent que l'augmentation du nombre de motifs d'oxyde d'éthylène de la chaîne polyéther des dispersants testés n'a pas d'effet significatif sur le temps de prise des galettes de plâtre.

### 5^{ème} série d'exemples avec des dispersants sélectionnés selon l'invention obtenus selon les premier et second modes de préparation précités

Le dosage des dispersants en pourcentage en poids d'extrait sec est égal à 0,1%. Les résultats sont reportés dans le tableau suivant :

| Référence du dispersant | Mode de préparation | Etalement (mm) | Début de prise (mn) | Fin de prise (mn) | Temps de prise (mn) |
|---|---|---|---|---|---|
| C | estérification | 180 | 04'00 | 12'00 | 08'00 |
| H⁽¹⁾ | copolymérisation | 122 | 05'30 | 17'40 | 12'10 |
| C additionné de réactifs résiduels ^{(a)} | - | 174 | 06'00 | 18'10 | 12'10 |
| F | estérification | 170 | 04'50 | 16'00 | 11'10 |
| I⁽¹⁾ | copolymérisation | 148 | 06'25 | 17'00 | 10'35 |
| F additionné de réactifs résiduels ^{(b)} | - | 165 | 05'55 | 16'45 | 10'50 |

| | | | | | |
|---|---|---|---|---|---|
| ^{(a)} et ^{(b)} : la quantité de réactifs résiduels ajoutée aux dispersants C et F est égale à 20%. | | | | | |

Les résultats mettent en évidence de meilleures performances d'étalement avec les dispersants C et F qu'avec les dispersants H⁽¹⁾ et I⁽¹⁾. Les galettes de plâtre réalisées à partir des dispersants H⁽¹⁾ et I⁽¹⁾ présentent un temps de début de prise plus long que les galettes de plâtre réalisées à partir des dispersants C et F. Ces résultats montrent que des dispersants préparés par copolymérisation conduisent à un retard de début de prise par rapport aux dispersants réalisés par estérification pour des structures équivalentes.

Par ailleurs, l'analyse des dispersants H⁽¹⁾ et I⁽¹⁾ obtenus par le premier mode de préparation (copolymérisation) met en évidence la présence de réactifs résiduels. L'évaluation de la concentration en réactifs résiduels est environ de 20% en poids rapporté au poids total du dispersant en extrait sec.

Egalement, ces résultats montrent que si des réactifs résiduels sont ajoutés aux dispersants C et F obtenus par le second mode de préparation (estérification) à raison de 20% en poids de réactifs résiduels rapporté au poids total du dispersant en sec, on constate un effet retard sur les temps de début et de fin de prise des galettes de plâtre renfermant les dispersants C et F auxquels ont été ajoutés les réactifs résiduels par rapport aux dispersants C et F sans réactifs résiduels. La présence de réactifs résiduels dans le dispersant apparaît comme étant l'une des explications des retards de prise constatés avec des gâchées de plâtre renfermant un dispersant de type polycarboxylique obtenus par copolymérisation.

## Revendications

1. Utilisation d'un dispersant de type carboxylique pour compositions aqueuses de sulfate de calcium hémihydraté, sélectionné dans le but de contrôler les temps de début et/ou de fin de prise, **caractérisé en ce que** ce dispersant-contrôleur de temps de début et/ou de fin de prise comprend au moins 75 % en nombre d'un enchaînement linéaire aléatoire d'unités structurelles (1) et (2) représentées par les formules suivantes : 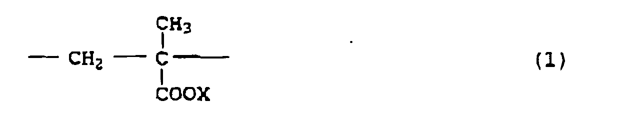 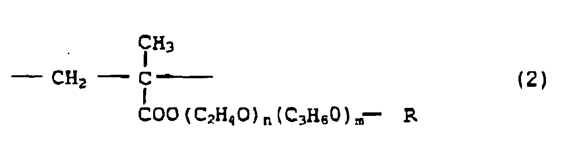 dans lesquelles X représente un atome d'hydrogène, un métal alcalin, un métal alcalino-terreux ou un ammonium, les unités structurelles (1) pouvant être identiques ou différentes ; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes ; le rapport du nombre d'unités structurelles (2) sur le nombre total des unités structurelles (1) et (2) étant compris entre 5 % et 60 %.

2. Utilisation selon la revendication 1, **caractérisée en ce que** le dispersant sélectionné comprend 100 % en nombre d'unités structurelles (1) et (2), en ne prenant pas en compte les unités de terminaison de chaîne.

3. Utilisation selon la revendication 1 ou 2, **caractérisée en ce que** la quantité de dispersant sélectionné additionnée à la composition aqueuse de sulfate de calcium hémihydraté est comprise entre 0,01 % et 2 % en poids en sec rapporté au poids de sulfate de calcium hémihydraté.

4. Utilisation selon la revendication 1 ou 2, **caractérisée en ce que** m est égal à zéro et n varie de 5 à 160.

5. Utilisation selon la revendication 1 ou 2, **caractérisée en ce que** le rapport du nombre d'unités structurelles (2), qui correspondent à des esters des unités structurelles (1), sur le nombre total des unités structurelles (1) et (2), est compris entre 5 % et 50 %.

6. Utilisation selon la revendication 1 ou 2, **caractérisée en ce que** R est un groupe alkyle de 1 à 5 atomes de carbone, préférentiellement R est un radical méthyle, éthyle, propyle ou butyle.

7. Utilisation selon la revendication 2, **caractérisée en ce que** m est égal à zéro, n varie de 7 à 120, le rapport du nombre d'unités structurelles (2), qui correspondent à des esters des unités structurelles (1), sur le nombre total des unités structurelles (1) et (2), est compris entre 15 % et 40 %.

8. Utilisation selon la revendication 1, **caractérisée en ce que** le dispersant est obtenu par copolymérisation d'un monomère (a), représenté par la formule (A) suivante, avec au moins un monomère (b), sélectionné parmi les composés représentés par la formule (B) suivante : 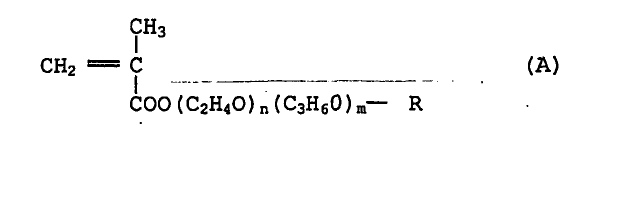 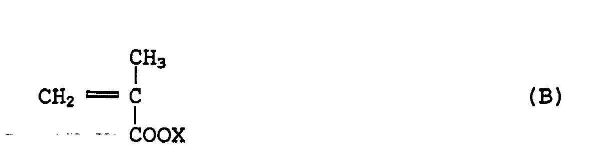 dans lesquelles X représente un atome d'hydrogène, un métal alcalin, un métal alcalino-terreux ou un ammonium ; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène ; R représente un groupe alkyle de 1 à 12 atomes de carbone.

9. Utilisation selon la revendication 1, **caractérisée en ce que** le dispersant sélectionné est obtenu par réaction d'estérification partielle d'un acide polyméthacrylique avec un polyéther contenant un groupe hydroxyle libre pouvant réagir avec une fonction carboxylique dudit acide polyméthacrylique, de formule générale
HO-(C₂H₄O)ₙ(C₃H₆O)ₘ-R
dans laquelle n est un nombre entier de 1 à 250, m est un nombre entier variant de 0 à 100 avec m < n, les groupes d'oxyde d'éthylène et d'oxyde de propylène étant distribués ou non de façon aléatoire, et R représente un groupe alkyle de 1 à 12 atomes de carbone.

10. Utilisation selon la revendication 9, **caractérisée en ce que** l'acide polyméthacrylique est obtenu par polymérisation d'un mélange de monomères comprenant au moins 75 % en mole d'acide méthacrylique et au plus 25 % en mole d'un comonomère de l'acide méthacrylique.

11. Utilisation selon la revendication 1, **caractérisée en ce que** la quantité de réactifs résiduels restant après la fabrication du dispersant, sélectionné, ayant conduit à la formation des unités structurelles (1) et/ou (2), est inférieure à 20 % en poids rapporté au poids total du dispersant exprimé en sec.

12. Utilisation selon la revendication 9, **caractérisée en ce que** la quantité de réactifs résiduels restant après la fabrication du dispersant, sélectionné, ayant conduit à la formation des unités structurelles (1) et/ou (2), est inférieure à 10 % en poids rapporté au poids total du dispersant exprimé en sec.

13. Utilisation selon la revendication 9, **caractérisée en ce que** la quantité de réactifs résiduels restant après la fabrication du dispersant, sélectionné, ayant conduit à la formation des unités structurelles (1) et/ou (2), est inférieure à 2% en poids rapporté en poids total du dispersant exprimé en sec.

14. Utilisation selon la revendication 1, **caractérisée en ce que** le dispersant sélectionné est constitué d'un mélange d'agents dispersants définis dans l'une des revendications 1 à 11.

## Claims

1. Use of a dispersant of the carboxylic type for aqueous of calcium sulphate hemihydrate compositions, selected with the aim of controlling the initial and/or final setting times, **characterised in that** said dispersant - controller of the initial and/or final setting times comprises at least 75% by number of a random, linear chain formation of structural units (1) and (2) represented by the following formulae: 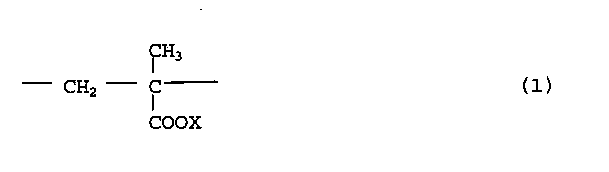 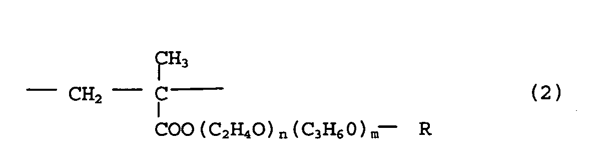 in which X represents a hydrogen atom, an alkali metal, an alkaline-earth metal or an ammonium, the structural units (1) may be either identical or different; n is an integer varying from 1 to 250, m is an integer varying from 0 to 100 where m<n, the propylene oxide groups may or may not be randomly distributed among the ethylene oxide groups, R represents an alkyl group with 1 to 12 carbon atoms, said structural units (2) can be identical or different; the ratio of the number of structural units (2) to the total number of structural units (1) and (2) being comprised between 5% and 60%.

2. Use according to claim 1, **characterised in that** the selected dispersant comprises 100% by number of structural units (1) and (2), excluding terminal chain units.

3. Use according to claim 1 or 2, **characterised in that** the quantity of selected dispersant added to the aqueous calcium sulphate hemihydrate composition is between 0.01 % and 2 % in dry weight relative to the weight of calcium sulphate hemihydrate.

4. Use according to claim 1 or 2, **characterised in that** m equals zero and n varies from 5 to 160.

5. Use according to claim 1 or 2, **characterised in that** the ratio of the number of structural units (2) which correspond to the esters of the structural units (1) to the total number of structural units (1) and (2) is between 5% and 50%.

6. Use according to claim 1 or 2, **characterised in that** R is an alkyl group of 1 to 5 carbon atoms, preferably R is a methyl, ethyl, propyl or butyl radical.

7. Use according to claim 2, **characterised n that** m equals zero, n varies from 7 to 120, the ratio of the number of structural units (2), which correspond to esters of the structural units (1) to the total number of structural units (1) and (2) is between 15% and 40%.

8. Use according to claim 1, **characterised in that** the dispersant is obtained by copolymerising a monomer (a), represented by the following formula (A), with at least one monomer (b), selected from the compositions represented by the following formula (B): 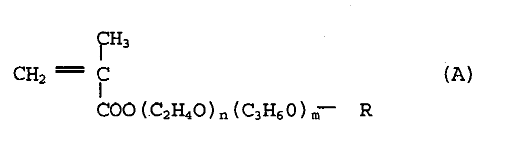 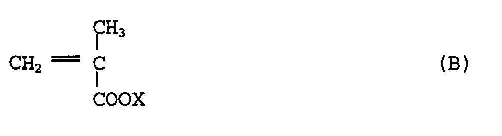 in which X represents a hydrogen atom, an alkali metal, an alkaline-earth metal or an ammonium; n is an integer varying from 1 to 250, m is an integer varying from 0 to 100 where m < n, the propylene oxide groups may or may not be randomly distributed among the ethylene oxide groups, R represents an alkyl group with 1 to 12 carbon atoms.

9. Use according to claim 1, **characterised in that** the dispersant selected is obtained by partial esterification of a polymethacrylic acid with a polyether containing a free hydroxyl group able to react with a carboxylic function of said polymethacrylic acid with the general formula
HO-(C₂H₄O)ₙ(C₃H₆O)ₘ-R
in which n is an integer from 1 to 250, m is an integer varying from 0 to 100 where m < n, the ethylene oxide groups and propylene oxide groups being randomly distributed or not, and R represents an alkyl group with 1 to 12 carbon atoms.

10. Use according to claim 9, **characterised in that** the polymethacrylic acid is obtained by polymerising a mixture of monomers comprising at least 75 mole % of methacrylic acid and at most 25 mole % of a comonomer of methacrylic acid.

11. Use according to claim 1, **characterised in that** the quantity of residual reagents remaining after the production of the selected dispersant, having resulted in the formation of structural units (1) and/or (2) is less than 20% by weight in relation to the total dry weight of the dispersant.

12. Use according to claim 9, **characterised in that** the quantity of residual reagents remaining after the production of the selected dispersant, having resulted in the formation of structural units (1) and/or (2) is less than 10% by weight in relation to the total dry weight of the dispersant.

13. Use according to claim 9, **characterised in that** the quantity of residual reagents remaining after the production of the selected dispersant, having resulted in the formation of structural units (1) and/or (2), is less than 2% by weight in relation to the total dry weight of the dispersant.

14. Use according to claim 1, **characterised in that** the selected dispersant consists of a mixture of dispersant agents defined in one of claims 1 to 11.

## Patentansprüche

1. Verwendung eines Dispergiermittels vom Carboxyl-Typ für wässrige Calciumsulfathemihydrat-Zusammensetzungen, das ausgewählt worden ist mit dem das Ziel, die Abbinde-Anfangs- und/oder -Endzeitpunkte zu steuern, **dadurch gekennzeichnet, dass** dieses Dispergiermittel zum Steuern der Abbinde-Anfangs- und/oder -Endzeitpunkte umfasst mindestens 75 % der Anzahl der Struktureinheiten (1) und (2) mit stochastischer linearer Verknüpfung, dargestellt durch die folgenden Formeln: 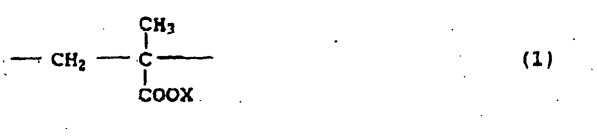 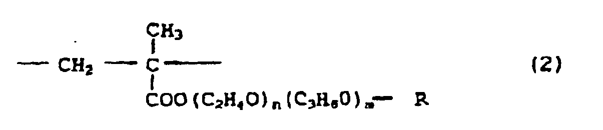 worin:
X steht für ein Wasserstoffatom, ein Alkalimetallatom, ein Erdalkalimetallatom oder eine Ammoniumgruppe,
wobei die Struktureinheiten (1) gleich oder voneinander verschieden sein können;
n steht für eine ganze Zahl von 1 bis 250,
m steht für eine ganze Zahl von 0 bis 100, wobei m < n,
wobei die Propylenoxid-Gruppen zwischen den Ethylenoxid-Gruppen stochastisch oder nicht-stochastisch verteilt sein können, und
R eine Alkylgruppe mit 1 bis 12 Kohlenstoffatomen,
wobei die genannten Struktureinheiten (2) gleich oder voneinander verschieden sein können;
wobei das Verhältnis zwischen der Anzahl der Struktureinheiten (2) und der Gesamtanzahl der Struktureinheiten (1) + (2) zwischen 5 % und 60 % liegt.

2. Verwendung nach Anspruch 1, **dadurch gekennzeichnet, dass** das ausgewählte Dispergiermittel 100 % der Anzahl der Struktureinheiten (1) und (2) ohne Berücksichtigung der Kettenabschlusseinheiten umfasst.

3. Verwendung nach Anspruch 1 oder 2, **dadurch gekennzeichnet, dass** die Zugabemenge des ausgewählten Dispergiermittels zu der wässrige Calciumsulfathemihydrat-Zusammensetzung zwischen 0,01 und 2 Trockengewichts-%, bezogen auf das Gewicht des Calciumsulfathemihydrats, beträgt.

4. Verwendung nach Anspruch 1 oder 2, **dadurch gekennzeichnet, dass** m für die Zahl Null steht und n von 5 bis 160 variiert.

5. Verwendung nach Anspruch 1 oder 2, **dadurch gekennzeichnet, dass** das Verhältnis zwischen der Anzahl der Struktureinheiten (2), die Estern der Struktureinheiten (1) entsprechen, und der Gesamtanzahl der Struktureinheiten (1) + (2) zwischen 5 und 50 % liegt.

6. Verwendung nach Anspruch 1 oder 2, **dadurch gekennzeichnet, dass** R für eine Alkylgruppe mit 1 bis 5 Kohlenstoffatomen, vorzugsweise für einen Methyl-, Ethyl-, Propyl oder Butyl-Rest steht.

7. Verwendung nach Anspruch 2, **dadurch gekennzeichnet, dass** m für die Zahl Null steht, n von 7 bis 120 variiert und dass das Verhältnis zwischen der Anzahl der Struktureinheiten (2), die Estern der Struktureinheiten (1) entsprechen, und der Gesamtanzahl der Struktureinheiten (1) + (2) zwischen 15 und 40 % liegt.

8. Verwendung nach Anspruch 1, **dadurch gekennzeichnet, dass** das Dispergiermittel hergestellt worden ist durch Copolymerisation eines Monomers (a), dargestellt durch die folgende Formel (A), mit mindestens einem Monomer (b), ausgewählt unter den Verbindungen, dargestellt durch die folgende Formel (B): 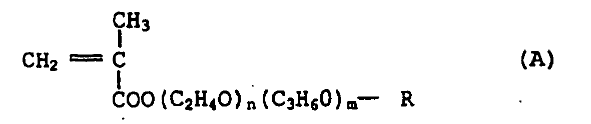 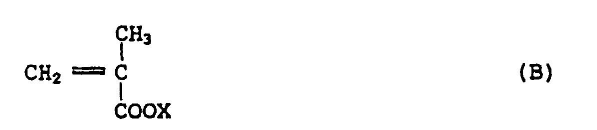 worin:
X steht für ein Wasserstoffatom, ein Alkalimetallatom, ein Erdalkalimetallatom oder eine Ammoniumgruppe;
n steht für eine ganze Zahl von 1 bis 250,
m steht für eine ganze Zahl von 0 bis 100, wobei m < n,
wobei die Propylenoxidgruppen zwischen den Ethylenoxidgruppen stochastisch oder nicht-stochastisch verteilt sein können; und
R steht für eine Alkylgruppe mit 1 bis 12 Kohlenstoffatomen.

9. Verwendung nach Anspruch 1, **dadurch gekennzeichnet, dass** das ausgewählte Dispergiermittel hergestellt worden ist durch eine partielle Veresterungsreaktion zwischen einer Polymethacrylsäure und einem Polyether, der eine freie Hydroxylgruppe enthält, die mit einer Carboxylfunktion der Polymethacrylsäure reagieren kann, der allgemeinen Formel
HO-(C₂H₄O)ₙ(C₃H₆O)ₘ-R
worin
n steht für eine ganze Zahl von 1 bis 250,
m steht für eine ganze Zahl von 0 bis 100, wobei m < n,
wobei die Ethylenoxidgruppen und die Propylenoxidgruppen stochastisch oder nicht-stochastisch verteilt sind, und
R steht für eine Alkylgruppe mit 1 bis 12 Kohlenstoffatomen.

10. Verwendung nach Anspruch 9, **dadurch gekennzeichnet, dass** die Polymethacrylsäure hergestellt worden ist durch Polymerisation einer MonomerenMischung, die umfasst mindestens 75 Mol-% Methacrylsäure und höchstens 25 Mol-% eines Methacrylsäure-Comonomers.

11. Verwendung nach Anspruch 1, **dadurch gekennzeichnet, dass** die Menge der restlichen Reagentien, die nach der Herstellung des ausgewählten Dispergiermittels zurückgeblieben ist, die zur Bildung der Struktureinheiten (1) und/oder (2) geführt hat, weniger als 20 Gew.-% beträgt, bezogen auf das Gesamtgewicht des Dispergiermittels, ausgedrückt als Trockensubstanz.

12. Verwendung nach Anspruch 9, **dadurch gekennzeichnet, dass** die Menge der restlichen Reagentien, die nach der Herstellung des ausgewählten Dispergiermittels zurückgeblieben ist, die zur Bildung der Struktureinheiten (1) und/oder (2) geführt hat, weniger als 10 Gew.-% beträgt, bezogen auf das Gesamtgewicht des Dispergiermittels, ausgedrückt als Trockensubstanz.

13. Verwendung nach Anspruch 9, **dadurch gekennzeichnet, dass** die Menge der restlichen Reagentien, die nach der Herstellung des ausgewählten Dispergiermittels zurückgeblieben ist, die zur Bildung der Struktureinheiten (1) und/oder (2) geführt hat, weniger als 2 Gew.-% beträgt, bezogen auf das Gesamtgewicht des Dispergiermittels, ausgedrückt als Trockensubstanz.

14. Verwendung nach Anspruch 1, **dadurch gekennzeichnet, dass** das ausgewählte Dispergiermittel ein Gemisch von Dispergiermitteln, wie sie in einem der Ansprüche 1 bis 11 definiert sind, darstellt.
